# FASCICULE DE BREVET EUROPEEN

(11) **EP 0 364 364 B1**
(45) Date de publication et mention de la délivrance du brevet: **07.12.1994**
(21) Numéro de dépôt: 89402821.6
(22) Date de dépôt: 12.10.1989
(51) Int. Cl.: G01S 3/789, G01S 17/88, G01S 17/06, G08B 17/12

(54) **Procédé et système pour la détection notamment de feu de forêts**
Verfahren und System zur Detektion, insbesondere von Waldbränden
Method and system for the detection of forest fires in particular

(30) Priorité: 13.10.1988 FR 8813498
(43) Date de publication de la demande: 18.04.1990
(73) Titulaire: Brown de Colstoun, François, Tucson Arizona 85723-6723 (US); Chambaret, Jean-Paul, 94250 Gentilly (FR); Chambaret, Yves, 75011 Paris (FR); Le Saige de la Villesbrunne, Arnaud, F-78000 Versailles (FR); Moscovici, Jean-Claude, F-75116 Paris (FR)
(72) Inventeur: Brown de Colstoun, François, Tucson Arizona 85723-6723 (US); Chambaret, Jean-Paul, 94250 Gentilly (FR); Chambaret, Yves, 75011 Paris (FR); Le Saige de la Villesbrunne, Arnaud, F-78000 Versailles (FR); Moscovici, Jean-Claude, F-75116 Paris (FR)
(74) Mandataire: Berger, Helmut

(56) Documents cités:
- EP-A- 0 117 162
- EP-A- 0 234 164
- GB-A- 2 021 893
- GB-A- 2 191 573
- US-A- 4 146 927
- ELECTRONICS & COMMUNICATIONS IN JAPAN,vol. 64, no. 7, juillet 1981, pages 117-126, Scripta Publishing Co., SilverSpring, Maryland, US; H. KIMURA et al.: "Automatic laser radar systems formeasurement of atmospheric pollutants"

## Description

L'invention concerne un procédé de détection d'une source de chaleur telle qu'un feu de forêt dans une zone surveillée et un système pour la mise en oeuvre de ce procédé.

Il est connu dans la technique, d'utiliser à cette fin un dispositif détecteur installé avantageusement sur une tour de façon à pouvoir effectuer une surveillance par un mouvement de balayage horizontal et, le cas échéant, vertical. Lorsque l'on utilise un détecteur passif qui détecte la source de chaleur par le rayonnement infra-rouge émis par cette source, il faut avoir au moins deux stations détectrices géographiquement éloignées l'une de l'autre pour pouvoir localiser la source de chaleur. Cet inconvénient n'existe plus pour des stations de détection active, par exemple du type à émission de rayons laser, qui localise une source de chaleur en exploitant la partie rétro-diffusée du rayonnement émis, par la colonne de fumée produite par le feu à détecter. Ce procédé de détection a cependant l'inconvénient majeur que le mouvement de balayage se fait dans un seul plan, par exemple horizontal, ce qui a pour conséquence que les feux se déclarant dans des zones en dépression sont difficilement détectables ou très souvent détectées trop tard, étant donné que la colonne de fumée se dissipe, par exemple sous l'effet du vent, avant de monter jusqu'au plan de balayage. Un tel procédé est décrit dans le document GB-A- 2191573.

La présente invention a pour objectif de proposer un procédé selon les revendications 1 et 3 et un système selon les systèmes 4 et 5 qui ne présentent plus les inconvénients susmentionnés tout en se limitant à l'utilisation d'un seul dispositif de détection.

Pour atteindre ce but, le procédé selon l'invention est caractérisé en ce que l'on définit les points à surveiller de ladite zone par la position angulaire avantageusement dans les plans horizontal et vertical du détecteur lorsqu'il est orienté sur ces points et associe à ces données angulaires au moins une donnée complémentaire tenant compte de la position géographique du point dans un système de référence prédéterminé.

Selon une caractéristique avantageuse de l'invention, lorsque le dispositif détecteur est du type passif, notamment du type à détection par le rayonnement infra-rouge émis par la source de chaleur, la donnée complémentaire précitée est une donnée géographique telle qu'une ligne de niveau ou une ligne de profil sur laquelle se trouve le point précité ou une information indiquant la position de ce point sur une carte géographique.

Selon une caractéristique avantageuse de l'invention, lorsqu'on utilise un dispositif détecteur actif effectuant un mouvement de balayage dans un plan prédéterminé, la donnée complémentaire est l'écart vertical du point à surveiller dudit plan et on modifie la position angulaire dans le plan vertical du dispositif détecteur en fonction de cet écart pour que le mouvement de balayage puisse suivre le profil de la zone à surveiller, tel que la ligne d'horizon.

Le système pour la mise en oeuvre du procédé selon l'invention, utilisant un dispositif détecteur passif effectuant un mouvement de balayage pas à pas, est caractérisé en ce qu'il comporte un dispositif ordinateur ayant une mémoire dans laquelle pour chaque point à surveiller est inscrite l'association des données de position angulaire du détecteur et des données complémentaires géographiques et qui est programmé pour indiquer les données géographiques d'un point correspondant à une position angulaire du dispositif détecteur.

Le système pour la mise en oeuvre du procédé utilisant un détecteur actif effectuant un mouvement de balayage pas à pas, est caractérisé en ce qu'il comporte un dispositif ordinateur ayant une mémoire dans laquelle est inscrite pour chaque position angulaire azimutale du dispositif détecteur une valeur angulaire verticale représentative de l'écart du point à surveiller, du plan de balayage de référence et un dispositif de commande de pivotement du détecteur autour d'un axe horizontal en vue de l'orientation du détecteur vers ledit point à surveiller.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant deux modes de réalisation de l'invention, et dans lesquels :
Les figures 1 et 2 illustrent de façon schématique un premier mode de réalisation du procédé selon l'invention utilisant un dispositif détecteur passif, par des vues dans des plans respectifs horizontal et vertical ;
La figure 3 illustre un deuxième mode de réalisation du procédé selon l'invention, qui utilise un dispositif détecteur actif ;
La figure 4 est une vue schématique d'un dispositif détecteur actif utilisable notamment dans le deuxième mode de réalisation selon la figure 3 ;
La figure 5 illustre un détail du dispositif détecteur selon la figure 4, par la représentation de plusieurs phases successives de fonctionnement, et
La figure 6 montre la courbe caractéristique du taux de rayonnement reçu du rayonnement rétro diffusé, en fonction de la distance de la source de chaleur, du dispositif détecteur selon les figures 4 et 5.

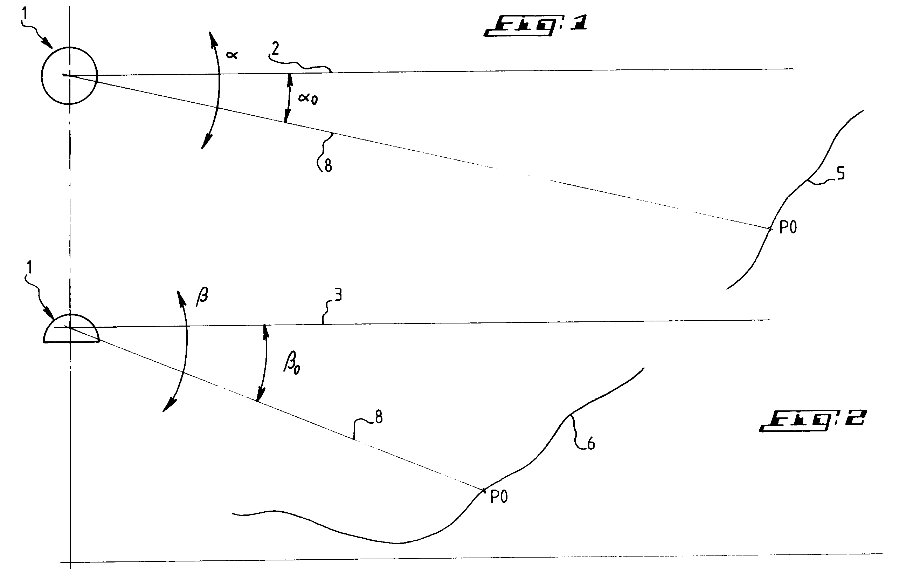

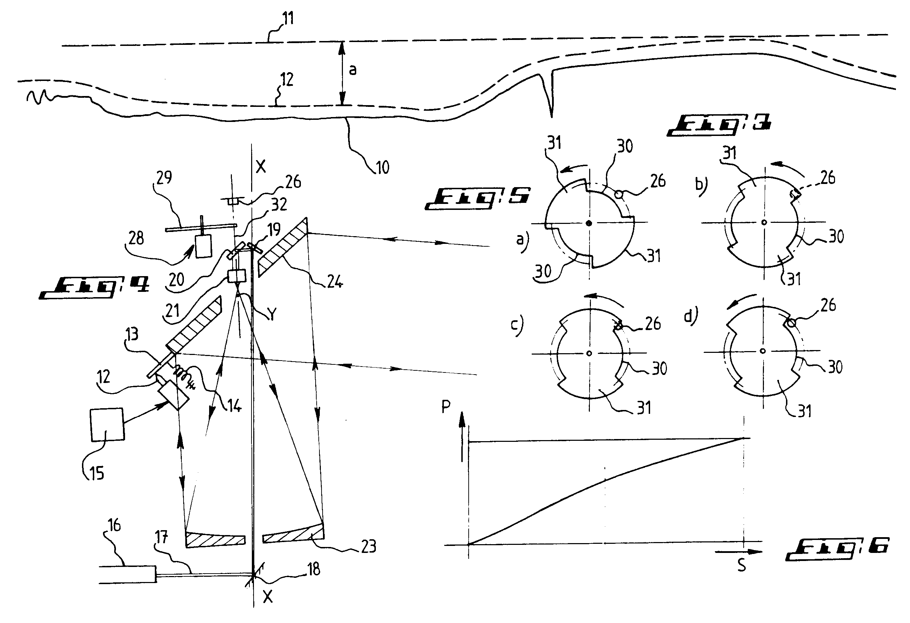

Le procédé selon l'invention, tel qu'illustré de façon schématique aux figures 1 et 2 implique l'utilisation d'un dispositif détecteur passif, adapté pour détecter une source de chaleur tel qu'un feu de forêt naissant, par le rayonnement infra-rouge émis par cette source. Ce dispositif est désigné de façon générale par le symbole de référence 1. Il peut être de tout genre connu approprié, susceptible d'effectuer un mouvement de balayage horizontal selon un angle prédéterminé, par exemple de 360°, et un mouvement de balayage dans un plan vertical. Les angles de balayage horizontal et vertical sont indiqués respectivement par des symboles α et β à partir d'une position angulaire de référence désignée respectivement par les références 2 et 3. Pour la mise en oeuvre de ce procédé, on pourrait utiliser avantageusement le système de détection d'une source de chaleur et le dispositif détecteur, qui sont décrits dans la demande de brevet européen N° 84 400 030.7 au nom des demandeurs.

Aux figures 1 et 2 on a dessiné des lignes de niveau et de profil respectivement 5 et 6 de la zone géographique à surveiller, pour une position angulaire prédéterminée dans des plans respectivement vertical et horizontal, du dispositif détecteur 1, plus précisément de l'axe optique 8 de ce dispositif. Comme il ressort des figures, chaque point géographique, tel que le point P₀ se trouvant sur les lignes de niveau et du profil 5 et 6 peut être défini, par rapport au dispositif détecteur 1 par une valeur d'angle horizontal ou azimutal α₀ et d'une valeur d'angle vertical β₀ ainsi que par au moins une donnée de coordonnée géographique dans un système de référence approprié. Les valeurs d'angles sont déterminées par la position angulaire correspondante de l'axe optique 8 du dispositif détecteur 1. La coordonnée géographique pourrait être fournie par la ligne de profil ou de niveau de ce point. On pourrait aussi le définir par les coordonnées d'un système de référence par exemple à axes de coordonnées. En tenant compte ainsi de la topographie de la zone géographique à surveiller, on peut associer à une paire de valeurs angulaires que l'on mesure une troisième coordonnée,que l'on a déterminé au préalable, par exemple une fois pour toutes en fonction de la topographie de la zone à surveiller. En d'autres termes, dans une position angulaire donnée de l'axe 8 du dispositif détecteur, ce point se définit par l'intersection de l'axe et de ses lignes de profil ou de niveau.

Par conséquent en associant à une paire de valeurs de positions angulaires du dispositif détecteur, la donnée géographique correspondante du point géographique déterminé par ces valeurs angulaires, il est possible de localiser géographiquement une source de chaleur dont le rayonnement infra-rouge a été reçu par le dispositif détecteur 1 à l'aide seulement des valeurs de positions angulaires de ce dernier au moment de la réception du rayonnemenent infra-rouge. Pour perfectionner le procédé, les coordonnées du point géographique correspondant à une position angulaire du détecteur peuvent être inscrites dans la mémoire par exemple d'un dispositif ordinateur et ce dernier peut être programmé de façon à indiquer immédiatement les coordonnées géographiques d'une source de chaleur détectée. Si l'on utilise le système décrit dans la demande de brevet européen N° 84 400 030.7 susmentionnée, l'ordinateur qui fait partie de ce système pourrait accomplir la fonction qui vient d'être indiquée , en plus des fonctions qui lui sont déjà conférées dans ce système. On comprend aisément que selon le procédé illustré aux figures 1 et 2, il est possible de localiser une source de chaleur en n'utilisant qu'un dispositif détecteur. Bien entendu, ce dispositif sera avantageusement monté sur une structure de support se trouvant à une hauteur suffisante au-dessus du sol et par rapport aux terrains à surveiller pour que la détermination de la donnée géographique des différents points de la zone à surveiller soit suffisamment précise et sans ambiguïté.

La figure 3 illustre un mode de réalisation du procédé selon l'invention applicable à un système de détection active d'une source de chaleur, par exemple du type à émission de rayon laser et à réception des rayons rétro-diffusés par la fumée produite par un feu de forêt naissant. Un système susceptible d'être utilisé pour la mise en oeuvre du procédé selon la figure 3 est décrit dans la demande de brevet européen N° 86 402 969.9 du 31 Décembre 1986 au nom des demandeurs. Dans ce système, il est possible de surveiller une zone géographique très étendue à partir d'une seule station équipée d'un dispositif de détection. En effet, le fonctionnement du dispositif récepteur étant fondé sur l'analyse des signaux de rayons laser rétro-diffusés, il peut déterminer la distance de la substance qui est à l'origine des signaux rétro-diffusés, du détecteur.

A la figure 3, la ligne 10 représente une vue en développement de la ligne d'horizon telle qu'on la voit à partir de la station de surveillance dans la portion angulaire balayée. Dans sa version connue, le dispositif détecteur effectue un mouvement de balayage dans un même plan, par exemple horizontal. Ce plan est indiqué par la ligne 11.

Selon la présente invention, on adapte le dispositif détecteur pour qu il puisse balayer l'horizon selon la ligne 12 qui s'étend sensiblement parallèlement à la ligne d'horizon 10, à une distance appropriée sensiblement constante. Cette distance est choisie de façon à obtenir une détection optimale d'un feu, pratiquement dès que la fumée produite par celui-ci s'élève au-dessus de la ligne d'horizon. Ainsi, selon l'invention la détection d'un feu se fait avec la même précision et sécurité dans toute la zone à surveiller, indépendamment du profil, plus ou moins accidenté de cette zone.

La figure 4 montre, de façon schématique la structure d'une station pour la détection et localisation d'un feu, adaptée pour la mise en oeuvre du procédé représenté à la figure 3. Cette station comprend essentiellement une source 16 d'un faisceau laser 17 de diamètre relativement faible, et, dans le trajet de ce faisceau émis 17, deux organes miroirs de renvoi 18, 19, un dispositif séparateur 20 tel qu'une lame séparatrice ou un cube séparateur à polarisation, un dispositif optique 21 de variation de polarisation et de convergence, un miroir 23 situé dans le faisceau divergent et conformé pour collimater le faisceau divergent reçu en un faisceau parallèle d'un relativement grand diamètre, et un ensemble optique 24. Le système, à l'exception de la source 16 et du miroir 18, tourne autour d'un axe X-X et dirige le faisceau sortant pour que celui-ci balaye la zone à surveiller. L'ensemble 24 comprend essentiellement un miroir plan de renvoi. Comme on le voit sur la figure, les différents éléments constitutifs de la station sont disposés de façon à obtenir une structure compacte. On constate en outre que les faisceaux émis et rétro-diffusés parcourent essentiellement le même chemin optique, entre le dispositif séparateur 20 et l'ensemble tournant 24, comme cela est indiqué par des flèches. La séparation des faisceaux émis et rétro-diffusés est effectuée par le dispositif séparateur 20 qui est conçu pour que le faisceau rétro-diffusé parvienne à un dispositif détecteur 26. Une station de ce type est décrite dans la demande de brevet européen N° 86 402 969.9 au nom des demandeurs.

Pour que le dispositif détecteur puisse balayer l'horizon en suivant la ligne 12 de la figure 3, on équipe le miroir 24 de moyens lui imprimant un mouvement angulaire autour de son axe horizontal Y perpendiculaire à l'axe de rotation X-X. Ces moyens comportent un organe poussoir 12 agissant sur un bras 13 solidaire du miroir en étant placé à sa périphérie et un ressort de rappel 14. L'organe poussoir pourrait être formé par la tige d'un vérin motorisé qui reçoit des signaux de commande d'une unité de données 15 qui produit pour chaque position angulaire du détecteur qui effectue un mouvement pas-à-pas un signal correspondant à l'écart vertical a de la ligne de balayage 12, de la ligne 11.

L'écart a pour chaque position angulaire a été préalablement inscrit dans une mémoire de l'unité de traitement de données tel qu'un dispositif ordinateur qui pourrait être celui équipant la station décrite dans la demande de brevet européen N° 86 402 969.9 susmentionnée.

Selon la présente invention, on prévoit entre le dispositif séparateur 20 et le dispositif détecteur 26, un dispositif 28 pourvu d'un disque rotatif 29. Ce disque de forme circulaire présente, diamétralement opposées et symétriques par rapport au centre, dans la partie périphérique deux échancrures 30 dont le fond est en forme d'un segment de cercle.

Ce disque 29 est disposé de telle façon qu'il intercepte le faisceau rétro-diffusé indiqué en 32 entre les dispositifs séparateur 20 et récepteur 26 et permette le passage de ce faisceau au dispositif récepteur 26, en fonction de sa position angulaire. En effet, le détecteur 26 est obturé par les parties périphériques 31 du disque tandis que l'accès au détecteur 26 est libre lorsqu'une des deux échancrures 30 se trouve angulairement au niveau du faisceau rétro-diffusé 32, comme dans le cas de la figure 5a.

Le disque rotatif 29 ainsi conformé a pour fonction d'empêcher un effet d'éblouissement au moment du tir du laser et d'établir une corrélation pratiquement linéaire entre la partie rétro-diffusée reçue P en fonction de la distance s du poste détecteur, au lieu où cette rétro-diffusion a été occasionnée, tel que le lieu d'une colonne de fumée. Cette corrélation est illustrée à la figure 6. On constate que seulement une faible partie rétro-diffusée du faisceau émis parvient au dispositif détecteur 26, lorsque la colonne de fumée est relativement proche de la station. Cet effet est obtenu de la manière illustrée aux figures 5b à 5d, qui illustrent respectivement les positions relatives angulaires du disque 29 et du dispositif détecteur 26 au moment du tir, à une distance moyenne, de par exemple 10 km et à la distance maximale de par exemple 20 km. En 5b, le détecteur est obturé, en 5c il est dégagé à moitié et en 5d il est complètement exposé. Par exemple pour une cadence d'un tir toutes les 70 millisecondes, on pourrait utiliser un disque d'un diamètre de 20 cm. Il convient de faire tourner alors le disque à une vitesse de 6000 tours par minute.

L'invention est notamment applicable dans des zones à profil accidenté. On comprend aisément qu'il est avantageux de placer le dispositif détecteur à une hauteur que l'on détermine en fonction de la topographie du terrain à surveiller et de la distance maximale de surveillance. Le dispositif de support pourrait être une tour d'une hauteur appropriée ou un système de tout autre nature, par exemple une plate-forme volante et arrimée à la terre de toute façon convenable.

Dans le cas où la structure de support n'est pas absolument immobile dans l'espace et subit des inclinaisons par exemple sous l'effet du vent ou des différences de température, par exemple produites par le rayonnement du soleil, on peut prévoir selon l'invention un système bi-pendulaire pour compenser ces inclinaisons parasites.

Le système pourrait comprendre deux tiges à pivotement amorti dans deux directions perpendiculaires, qui portent à leurs extrémités un noyau coopérant avec un capteur avantageusement du type inductif à démodulation synchrone. Les capteurs peuvent retenir des inclinaisons parasites de l'onde de 20˝ d'arc. Un tel système est connu en soi.

A partir des données fournies par ce système bi-pendulaire on calcule des corrections angulaires à apporter au miroir 24 par l'unité 15, d'une façon connue en soi.

## Revendications

1. Procédé de détection d'une source de chaleur dans une zone surveillée, selon lequel on déplace un dispositif détecteur (1) installé sur un support surélevé par rapport à ladite zone, amène ce détecteur à effectuer un mouvement de balayage dans des plans horizontal et vertical de façon à pouvoir orienter l'axe du dispositif détecteur (1) sur une source de chaleur située dans la zone à surveiller et détermine le lieu de cette source à l'aide des angles d'orientation du dispositif détecteur (1) dans les plans horizontal et vertical, caractérisé en ce que, pour la détection d'une source de chaleur tel qu'un feu de forêt dans une zone géographique à topographie accidentée, on définit chaque point à surveiller par les coordonnées angulaires d'orientation du détecteur et associe à ces deux coordonnées angulaires au moins une donnée complémentaire relative à la position géographique du point dans un système de référence prédéterminé à trois dimensions et détermine le lieu d'une source de chaleur à l'aide de la donnée complémentaire géographique associée dans une mémoire aux coordonnées angulaires du point de la source de chaleur obtenue par l'orientation du détecteur sur ce point.

2. Procédé selon la revendication 1, caractérisé en ce que la donnée complémentaire est une donnée géographique telle qu'une ligne de niveau ou de profil (5, 6) sur laquelle se trouve le point précité ou une information indiquant la position de ce point sur une carte géographique.

3. Procédé pour détecter et localiser une source de chaleur telle qu'un feu de forêt dans une zone à surveiller, selon lequel on utilise un dispositif détecteur (1) à émission de rayons notamment laser et à réception des rayons rétro-diffusés par la fumée produite par un feu, on amène le détecteur à effectuer un mouvement de balayage dans un plan prédéterminé, définit les points à surveiller par les données angulaires d'orientation du dispositif détecteur (1) dans ledit plan, caractérisé en ce que, pour la surveillance dans une zone à topographie accidentée ayant une ligne d'horizon accidenté, on associe aux données angulaires de chaque point une donnée complémentaire tenant compte de la position de ce point par rapport au profil topographique, tel que l'écart vertical du point de la ligne d'horizon et modifie la position angulaire dans le plan vertical du dispositif détecteur (1) de chaque point à balayer en fonction de cet écart pour que le mouvement de balayage puisse suivre le profil de la zone à surveiller.

4. Système pour la mise en oeuvre du procédé selon l'une des revendications 1 ou 2, du type comprenant des moyens détecteurs de rayonnement produit par une source de chaleur dans la zone surveillée et qui sont adaptés pour effectuer un mouvement de balayage angulaire autour d'un axe sensiblement vertical et dans un plan vertical et pourvus d'un dispositif de traitement des informations, caractérisé en ce qu'il comprend un seul dispositif détecteur (1) pour la zone à surveiller et que le dispositif de traitement comprend un dispositif ordinateur (15) dans la mémoire duquel sont inscrites pour chaque point de la zone à surveiller et définies par la position angulaire du dispositif détecteur (1) orienté sur ce point, des données complémentaires géographiques de localisation du point dans la zone à surveiller, et qui est programmé pour indiquer ces données géographiques pour chaque point précité.

5. Système pour la mise en oeuvre du procédé selon l'une des revendications 1 ou 3, comprenant un détecteur actif de chaleur effectuant un mouvement de balayage pas à pas dans un plan vertical, caractérisé en ce qu'il comporte un dispositif ordinateur (15) ayant une mémoire dans laquelle est inscrite pour chaque position angulaire azimutale du dispositif détecteur une valeur angulaire verticale représentative de l'écart (a) du point à surveiller, du plan de balayage (11) de référence et un dispositif de commande (12, 13 et 14) de pivotement du détecteur autour d'un axe horizontal (Y) en vue de l'orientation du détecteur vers ledit point à surveiller.

6. Système selon la revendication 5, comprenant une source laser à émission sous forme d'impulsions récurrentes, un dispositif optique traversé par les rayons émis et rétro-diffusés pourvu d'un dispositif séparateur des rayons émis et rétro-diffusés et d'un dispositif optique d'élargissement et de réduction du diamètre de faisceau parallèle selon que celui-ci est émis ou rétro-diffusé, un miroir plan de renvoi tournant, monté rotatif dans le faisceau précité de plus grand diamètre et orienté pour que les faisceaux lasers émis effectuent un mouvement de balayage prédéterminé, de pas à pas caractérisé en ce que le miroir plan de renvoi (24) rotatif autour d'un axe vertical X-X est monté pivotant autour d'un axe horizontal Y et le dispositif de commande de pivotement du détecteur comporte des moyens de pivotement autour de son axe horizontal, du miroir (24), selon un angle déterminé par le dispositif ordinateur (15).

7. Système selon la revendication 6, caractérisé en ce que les moyens de commande de pivotement comportent un organe poussoir (12) solidaire d'un vérin motorisé relié électriquement au dispositif ordinateur (15) et un organe de rappel (14), tel qu'un ressort, ledit organe poussoir (12) et l'organe de rappel (14) agissant sur un bras (13) solidaire du miroir plan (24) et avantageusement fixé à la périphérie de celui-ci.

8. Système selon l'une des revendications 6 ou 7, caractérisé en ce qu'un disque interrupteur (29) rotatif est monté dans la trajectoire des rayons rétro-diffusés (32) en amont d'un organe détecteur (26) de ces rayons, qui comporte des fenêtres de passage (30) des rayons rétro-diffusés à l'organe récepteur (26), et le mouvement angulaire du disque d'interruption (29) par rapport à l'instant de tir d'un rayon laser est choisi de telle façon qu une lumière (30) libère ledit passage progressivement pendant la période de la réception du rayon rétro-diffusé reçue pour que la partie des rayons rétro-diffusés par l'organe détecteur (26) augmente avantageusement progressivement avec l'accroissement de la distance du lieu de la rétro-diffusion, du dispositif détecteur.

9. Système selon l'une des revendications 4 a 8, caractérisé en ce qu'il comprend un système bi-pendulaire pour compenser les inclinaisons parasites de la structure de support du dispositif détecteur.

## Patentansprüche

1. Verfahren zum Aufspüren einer Wärmequelle in einem überwachten Gebiet, bei welchem man eine an einem gegenüber dem besagten Gebiet überhöhten Halter angeordnete Fühlervorrichtung (1) verstellt, man diesen Fühler veranlasst, eine Abtastbewegung in waagerechten und lotrechten Ebenen durchzuführen, um die Achse der Fühlervorrichtung (1) auf eine in dem zu überwachenden Gebiet liegende Wärmequelle richten zu können und man den Ort dieser Quelle mit Hilfe der Winkel zur Ausrichtung der Fühlervorrichtung (1) in der waagerechten und senkrechten Ebene bestimmt, dadurch gekennzeichnet, dass für die Ermittlung einer Wärmequelle, wie eines Waldbrandes in einem geographischen Gebiet mit unebener Topographie, man jeden zu überwachenden Punkt durch die Winkelkoordinaten zur Ausrichtung des Fühlers bestimmt und man diesen beiden Winkelkoordinaten wenigstens ein sich auf die geographische Lage des Punktes in einem vorbestimmten dreidimensionalen Bezugssystem beziehendes zusätzliches Datum zuordnet und man den Ort einer Wärmequelle mit Hilfe des durch die Ausrichtung des Fühlers auf diesen Punkt erhaltenen, in einem Speicher den Winkelkoordinaten des Punktes der Wärmequelle zugeordneten zusätzlichen geographisen Datums bestimmt.

2. Verfahren nach Anspruch 1, dadurch gekennzeichnet, dass das zusätzliche Datum ein geographisches Datum, wie eine Niveau- oder Profillinie (5, 6) auf welchem sich der vorgenannte Punkt befindet oder eine die Stellung dieses Punktes auf einer geographischen Karte anzeigende Auskunft, ist.

3. Verfahren zum Aufspüren und zur Ortung einer Wärmequelle, wie eines Waldbrandes in einem zu überwachenden Gebiet, gemäss welchem, man eine Fühlervorrichtung (1) mit Aussendung von insbesondere Laserstrahlen und mit Empfang der von dem durch ein Feuer erzeugten Rauch rückgestreuten Strahlen verwendet, man den Fühler veranlasst, eine Abtastbewegung in einer vorbestimmten Ebene durchzuführen, man die zu überwachenden Punkte durch die Winkeldaten zum Ausrichten der Fühlervorrichtung (1) in der besagten Ebene bestimmt, dadurch gekennzeichnet, dass, für die Überwachung eines Gebietes mit unebener Topographie mit einer unebenen Horizontlinie, man den Winkeldaten jedes Punktes ein die Lage dieses Punktes in bezug auf das topographische Profil berücksichtigendes zusätzliches Datum, wie die senkrechte Abweichung des Punktes von der Horizontlinie zuordnet und man die Winkelstellung in der lotrechten Ebene der Vorrichtung (1) zur Ermittlung des abzutastenden Punktes in Abhängigkeit dieser Abweichung ändert, damit die Abtastbewegung dem Profil des zu überwachenden Gebietes folgen kann.

4. System für die Durchührung des Verfahrens nach einem der Ansprüche 1 oder 2, derjenigen Gattung mit Mitteln zum Aufspüren der durch eine Wärmequelle in einem überwachten Gebiet erzeugten Strahlung, die angepasst sind, um eine Winkelabtastbewegung um eine etwa senkrechte Achse und in einer lotrechten Ebene durchzuführen und mit einer Datenverarbeitungsvorrichtung versehen sind, dadurch gekennzeichnet, dass es eine einzige Fühlervorrichtung (1) für das zu überwachende Gebiet aufweist und dass die Verarbeitungsvorrichtung eine Rechnervorrichtung (15) umfasst, in deren Speicher für jeden Punkt des zu überwachenden Gebietes durch die Winkellage der auf diesen Punkt ausgerichteten Fühlervorrichtung (1) bestimmte zusätzliche geographische Daten zur Ortung des Punktes in dem zu überwachenden Gebiet eingetragen sind und die programmiert ist, um diese geographischen Daten für jeden vorgenannten Punkt anzugeben.

5. System zur Durchführung des Verfahrens nach einem der Ansprüche 1 oder 3, mit einem eine Abtastbewegung in einer senkrechten Ebene schrittweise durchführenden aktiven Wärmefühler, dadurch gekennzeichnet, dass es eine Rechnervorrichtung (15) aufweist, mit einem Speicher in welchem für jede azimutale Winkelstellung der Fühlervorrichtung ein den Abtand (a) des zu überwachenden Punktes von der Bezugsabtastebene (11) darstellender senkrechter Winkelwert eingetragen ist sowie eine Vorrichtung (12, 13 und 14) zur Steuerung des Schwenkens des Fühlers um eine waagerechte Achse (Y) herum zur Ausrichtung des Fühlers auf dem besagten zu überwachenden Punkt.

6. System nach Anspruch 5, mit einer sich wiederholende Impulseaussendenden Laserquelle, eine durch die ausgesandten und rückgestreuten Strahlen durchsetzte optische Vorrichtung, die mit einer Vorrichtung zum Trennen der ausgesandten und rückgestreuten Strahlen und mit einer Vorrichtung zum Erweitern und Vermindern des Durchmessers des parallelen Bündels, je nachdem dieser ausgesandt oder rückgestreut wird, versehen ist, einem drehbar in dem vorgenannten Bündel grösseren Durchmessers angeordneten Auflichtdrehplanspiegel, der ausgerichtet ist, damit die ausgesandten Laserbündel eine vorbestimmte Abtastbewegung schrittweise durchführen, dadurch gekennzeichnet, dass der um eine senkrechte Achse X-X drehbar angeordnete Auflichtdrehplanspiegel (24) um eine waagerechte Achse Y schwenkbar angeordnet ist und die Vorrichtung zur Steuerung der Verschwenkung des Fühlers Mittel zum Verschwenken des Spiegels (24) um seine waagerechte Achse herum gemäss einem durch die Rechnervorrichtung (15) bestimmten Winkel aufweist.

7. System nach Anspruch 6, dadurch gekennzeichnet, dass die Schwenkungssteuermittel ein mit einem elektrisch an die Rechnervorrichtung (15) angeschlossenen Stellmotor fest verbundenes Stossglied (12) und ein Rückstellglied (14), wie eine Feder aufweisen, wobei das besagte Stossglied (12) und das Rückstellglied (14) auf einen mit dem Planspiegel (24) fest verbundenen und vorteilhaft an dem Umfang desselben befestigten Arm (13) einwirken.

8. System nach einem der Ansprüche 6 oder 7, dadurch gekennzeichnet, dass eine unterbrechende Drehscheibe (29) in der Laufbahn der rückgestreuten Strahlen (32) stromaufwärts eines Gliedes (26) zur Ermittlung dieser Strahlen angeordnet ist, welche Fenster (30) zum Durchlassen der zu dem Empfangsglied (26) rückgestreuten Strahlen aufweist, und die Winkelbewegung der Unterbrechungsscheibe (29) in bezug auf den Zeitpunkt des Abschusses eines Laserstrahles derart gewählt wird, dass ein Langloch (30) den besagten Durchlass während der Periode des Empfangs des empfangenen rückgestreuten Strahles freigibt, damit der Teil der durch das Fühlerglied (26) rückgestreuten Strahlen vorteilhaft allmählich mit der Zunahme der Entfernung des Ortes der Rückstreuung von der Fühlervorrichtung zunimmt.

9. System nach einem der Ansprüche 4 bis 8, dadurch gekennzeichnet, dass es ein zweipendelndes System zum Ausgleich der störenden Neigungen des Halterungsaufbaues der Fühlervorrichtung aufweist.

## Claims

1. Method of detecting a heat source in a watched zone, according to which one displaces a sensing device (1) mounted onto a support raised with respect to the said zone, one causes this sensor to carry out sweeping motion in horizontal and vertical planes so as to make it possible to orient the axis of the sensing device (1) towards a heat source located in the zone to be watched and one determines the location of this source with the assistance of the angles of orientation of the sensing device (1) in the horizontal and vertical planes, characterized in that for the purpose of the detection of the heat source such as a forest fire in a geographical zone with an uneven topography, one defines each point to be watched by the angular co-ordinates of orientation of the sensor and one associates with these two angular co-ordinates at least one additional information relating to the geographical position of the point in a predetermined three-dimensional reference system and one determines the place of a heat source with the assistance of the additional geographical information associated in a storage with the angular coordinates of the point of the heat source obtained by the orientation of the sensor towards this point.

2. Method according to claim 1, characterized in that the additional information is a geographical datum such as a level or profile line (5, 6) onto which the aforesaid point is lying or an information indicating the position of this point on a geographical map.

3. Method for detecting and locating a heat source such as a forest fire in a zone to be watched, according to which one uses a detecting device (1) with an emission of in particular laser radiations and a receiving of the radiations back-scattered by the smoke produced by a fire, one causes the detector to carry out a sweeping motion in a predetermined plane, one defines the points to be watched by the angular data of orientation of the detecting device (1) within the said plane, characterized in that for the purpose of the watching in a zone with an uneven topography having an uneven line of horizon, one associates with the angular data of each point an additional datum taking into account the position of this point with respect to the topographic profile, such as a vertical deviation of the point from the line of horizon and one changes the angular position in the vertical plane of the detecting device (1) of each point to be swept as a function of this deviation in order that the sweeping motion may follow the profile of the zone to be watched.

4. System for performing the method according to one of claims 1 or 2, of the type comprising means for detecting the radiation produced by a heat source in the zone to be watched and which are adapted to carry out an angular sweeping motion about a substantially vertical axis and in a vertical plane and provided with a data processing device, characterized in that it comprises one single detecting device (1) for the zone to be watched and in that the processing device comprises a computer device (15) in the storage of which are entered for each point of the zone to be watched and are defined by the angular position of the detecting device (1) oriented towards this point, additional geographical data for locating the point in the zone to be watched and which is programmed to indicate these geographical data for each aforesaid point.

5. System for performing the method according to one of claims 1 or 3, comprising an active heat detector carrying out a stepwise sweeping motion in a vertical plane, characterized in that it comprises a computer device (15) having a storage into which is entered for each angular azimuthal position of the detecting device a vertical angular value representative of the deviation (a) of the point to be watched from the reference plane of sweep (11) and a device (12, 13 and 14) for the control of the swinging of the detector about a horizontal axis (Y) for the purpose of orienting the detector towards the said point to be watched.

6. System according to claim 5, comprising a laser source with an emission as recurrent pulses, an optical device through which are travelling emitted and back-scattered radiations, provided with a device for the separation of the emitted and back-scattered radiations and with an optical device for the enlargement and the reduction of the diameter of the parallel beam according as the latter is emitted or back-scattered, a flat rotary reflecting mirror rotatably mounted in the aforesaid beam of larger diameter and oriented so that the emitted laser beams carry out a predetermined stepwise sweeping motion, characterized in that the flat reflecting mirror (24) rotatable about a vertical axis X-X is pivotally mounted about a horizontal axis Y and the device for the control of the pivoting of the detector comprises means for the pivoting about its horizontal axis of the mirror (24) according to an angle determined by the computer device (15).

7. System according to claim 6, characterized in that the pivoting control means comprise a pusher member (12) made fast to a power actuator electrically connected to the computer device (15) and a return member (14) such as a spring, the said pushing member (12) and the return member (14) acting upon an arm (13) made fast to the flat mirror (24) and advantageously fastened to the periphery thereof.

8. System according to one of claims 6 or 7, characterized in that a rotary interrupting disc (29) is mounted in the path of travel of the back-scattered radiations (32) upstream of a member (26) for detecting these radiations, which comprises windows (30) for the passage of the radiations back-scattered to the receiving member (26) and the angular motion of the interrupting disc (29) with respect to the moment of shooting a laser radiation is selected in such a manner that an elongated opening (30) disengages the said passageway gradually during the period of receiving of the back-scattered radiation received in order that the portion of radiations back-scattered by the detecting member (26) advantageously increases gradually with the increase of the distance of the place of the retrodiffusion from the detecting device.

9. System according to one of claims 4 to 8, characterized in that it comprises a bi-pendular system to compensate for the parasitic inclinations of the supporting structure of the detecting device.
